# EUROPÄISCHE PATENTSCHRIFT

(11) **EP 0 970 905 B1**
(45) Veröffentlichungstag und Bekanntmachung des Hinweises auf die Patenterteilung: **21.05.2003**
(21) Anmeldenummer: 99111983.5
(22) Anmeldetag: 28.06.1999
(51) Int. Cl.: B65H 19/10

(54) **Klebeband und seine Verwendung**
Adhesive tape and it's use
Bande adhésive et son utilisation

(30) Priorität: 09.07.1998 DE 19830673
(43) Veröffentlichungstag der Anmeldung: 12.01.2000
(73) Patentinhaber: Tesa AG, 20253 Hamburg (DE)
(72) Erfinder: Wienberg, Uwe, 25436 Uetersen (DE); Nootbaar, Jens, 22527 Hamburg (DE); Aster, Günter, 22147 Hamburg (DE)

(56) Entgegenhaltungen:
- EP-A- 0 418 527
- DE-A- 19 628 317

## Beschreibung

Die Erfindung betrifft ein Klebeband für den fliegenden Rollenwechsel (flying splice) in Papieveredelungsmaschinen, Rotationsdruckmaschinen und dergleichen, sowie seine entsprechende Verwendung.

Der fliegende Rollenwechsel ist in Papierfabriken oder dergleichen ein gängiges Verfahren, um ohne die schnell laufenden Maschinen anhalten zu müssen eine alte, fast abgespulte Papierrolle durch eine neue zu ersetzen. Dabei werden doppelseitig klebende Selbstklebebänder, sogenannte Fixe, eingesetzt, die einerseits hochklebrig und -tackig sind, andererseits aber aufgrund ihrer wasserlöslichen Selbstklebemassen und Papierträger beim Wiedereinsatz der Papierabfälle in der Papiermaschine nicht stören. Diese Fixe werden in kunstvoller Weise in Zackenform am Bahnanfang verklebt, eine Prozedur, die erfahrene Fachleute verlangt, wobei für den gesamten Arbeitsvorgang aufgrund der schnell laufenden Maschinen nur etwa 4 - 5 Minuten Zeit bleibt.

Obgleich diese Technologie bewährt und eingespielt ist, hat sie doch einige Nachteile. So ist Fachpersonal nötig, Hektik ist vorgegeben, und die Verklebungen sind auch relativ dick, da jeweils zwei Papierlagen und das dazwischen klebende Fix das Resultat sind: ein in der Papierindustrie unerwünschtes Resultat.

Für diese "Spitzenverklebung" beim fliegenden Rollenwechsel gibt es diverse Produkte im Handel, sogenannte Fixe, die neben einem Papierträger eine wasserlösliche Selbstklebemasse beidseits beschichtet aufweisen. Solche Klebebänder sind u.a. unter der Bezeichnung tesafix (Beiersdorf) im Handel.

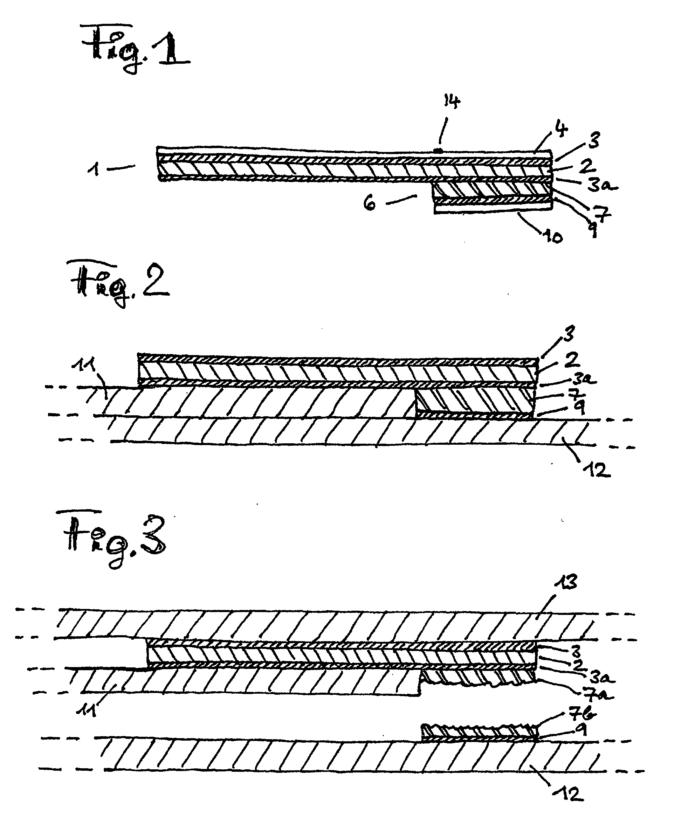

Bekannt ist ferner aus ***EP 418 527 A2*** ein Verfahren zum Vorbereiten einer Bedruckstoffbahnrolle in einem Rollenwechsler einer Rotationsdruckmaschine, bei dem Klebestreifen verwendet werden, die in drei Zonen unterteilt sind (Sp. 3, Z. 12 ff. und Fig. 1 und 2), wobei die mittlere Zone 6 perforiert ist. An dieser Perforierung findet dann das Aufreißen statt (Sp. 3, Z. 35).

Zudem ist aus ***DE 40 33 900 A1*** ein Klebeband bekannt, das für einen vorgenannten Splice geeignet ist und das stark unterschiedliche Klebkräfte auf den einander gegenüberliegenden Seiten aufweist, so daß es beim Abreißen eher am Tambour (vgl. Sp. 2, Z. 17 ff) haftet.

In der Praxis haben derartige Klebebänder jedoch gravierende Nachteile, insbesondere durch nach dem Splice vorliegende klebende Flächen.

Es ist aus ***DE 196 28 317 A1*** aber auch bereits ein Klebeband für derartige Anwendungen bekannt, bei dem nach erfolgten Splice keine klebenden Flächen mehr auftreten, indem dort ein spleißfreudiger Papierträger 7 zum Einsatz kommt, der beim Splice spaltet und nach erfolgtem Splice die Klebmassen 8 und 9 abdeckt, vgl. Fig. 3. Auch aus ***DE 196 32 689 A1*** ist ein ähnliches Klebeband für diese Anwendung bekannt, wobei hier jedoch ein spleißfreudiger Papierträger eingesetzt wird, der über die gesamte Breite des Klebebandes spaltet, vgl. insbes. Fig. 3.

Gleichwohl haben auch derartige Klebebänder ihre Nachteile. Bei Applizieren eines Klebebandes nach DE 196 28 317 erweist es sich als problematisch, daß das Ende einer Papierrolle (in Fig. 2 als 11 bezeichnet), Spielraum behält indem entweder das Klebeband mit seiner Selbstklebemasse 9 noch nicht auf der darunter befindlichen Papierbahn verklebt ist, oder bei zunächst auf die nächstuntere Bahn verklebtem Klebeband noch nicht mit der obersten Bahn verklebt ist, oder aber auch nach erfolgter vollständiger Verklebung sich leicht von der nächstunteren Bahn nach außen abheben kann und dabei ggf. den spleißfreudigen Papierträger 7 beschädigt, bevor der eigentliche Splice angesetzt wird. Bei einem Klebeband gem. DE 196 32 681 zeigt sich eine Schwachstelle insbesondere dort, wo nach erfolgtem Splice die alte und die neue Bahn verbunden sind (etwa im linken Drittel der Fig. 3), wo dann leicht ein Reißer auftritt und der Splice damit mißlungen ist.

Nachteilig ist es bei Klebebändern gemäß DE 196 28 317 und DE 196 32 681 zudem, daß diese unter die oberste Papierbahn eines Ballens geklebt werden müssen. Dies erweist sich in der Praxis als schwierig und ist insbesondere wenig geeignet für eine automatisierte Anbringung, mit Maschinenhilfe, einem Applikator oder dergleichen. Ein Aufkleben statt Hinterkleben ist also erwünscht.

Aufgabe der Erfindung war es, hier Abhilfe zu schaffen, insbesondere die Nachteile des Standes der Technik zu vermeiden oder zumindest in für die Praxis ausreichender Weise abzumildern.

Demgemäß betrifft die Erfindung ein Klebeband, wie dies näher in den Ansprüchen gekennzeichnet ist. Vorteilhafte Ausführungsformen sind in den Unteransprüchen angegeben.

Der Hauptanspruch betrifft ein Klebeband für den fliegenden Rollenwechsel in Papierveredelungsmaschinen oder dergleichen, mit einem Papierträger und einer wasserlöslichen Selbstklebemasse, wobei der Papierträger (2) beidseitig mit einer wasserlöslichen Selbstklebemasse (3, 3a) beschichtet ist, und wobei ein Randbereich der Rückseite des beidseitig beschichteten Klebebandes (1) mit einem einseitig klebenden Klebeband (6) ausgerüstet ist, welches seinerseits einen spleißfreudigen Papierträger (7) aufweist, der wiederum mit wasserlöslicher Selbstklebmasse (9) ausgerüstet ist, wobei das einseitig klebende Klebeband (6) auf der Rückseite des beidseitig beschichteten Klebebandes (1) so angeordnet ist, daß das einseitig klebende Klebeband (6) seitlich mit der einen Seite des beidseitig beschichteten Klebebandes (1) abschließt, und wobei die Breite des einseitig klebenden Klebebandes (6) kleiner ist als die Breite des beidseitig beschichteten Klebebandes (1).

Bei einer vorteilhaften Ausführungsform des erfindungsgemäßen Klebebandes weisen die Selbstklebemassen (3, 9) eine Abdeckung (4, 10) auf.

Bei einer weiteren vorteilhaften Ausführungsform des erfindungsgemäßen Klebebandes ist das beidseitig beschichtete Klebeband (1) 60 bis 150 mm breit, während das auf der Rückseite vorgesehene einseitig klebende Klebeband (6) 4 bis 20 mm, insbesondere 5 bis 10 mm breit ist.

Mit dem erfindungsgemäßen Klebeband werden hervorragende Ergebnisse beim Splice erzielt und insbesondere eine beträchtliche Verbesserung gegenüber einen Band gemäß DE 196 28 317 erreicht.

Besonders augenfällig wird dies beim Einsatz eines erfindungsgemäßen Klebebandes auf einer Papierrolle, die zum Splice vorbereitet ist aber noch sozusagen warten muß. Hier kann bei aufgeklebtem Klebeband das obere Trennpapier bis kurz vor dem schlußendlichen Einsatz der Rolle auf dem Klebeband verbleiben, wobei ein hervorragend fixierter Verbund vorliegt, eben mit überklebtem Ansatz anstelle eines hinterklebten solchen. Auch bei längerem Zwischenlagern einer solchen Rolle oder etwa beim Verrüsten an anderer Stelle und Transport der Rolle ist diese Sicherung gegeben.

Und auch ein Verfahren unter Verwendung derartiger Klebebänder ist Gegenstand der Erfindung, nämlich ein Verfahren eines fliegenden Rollenwechsels in einer Papierveredelungsmaschine oder dergleichen, wobei ein Klebeband mit einem Papierträger und einer wasserlöslichen Selbstklebemasse verwendet wird, man ein Klebeband nach einem der Ansprüche einsetzt und damit die obersten Papierbahn einer neuen Papierrolle teilweise überklebt.

Bevorzugt ist dabei dieses Verfahren derart, daß die untere Abdeckung zunächst abgezogen wird und das Klebeband (1) auf die oberste Papierbahn einer neuen Papierrolle mit dem freiliegenden Teil der Selbstklebemasse 3a geklebt wird, während der untere klebende Teil des einseitig klebenden Klebebandes (6) vor die Kante der obersten Papierbahn auf die Papierrolle geklebt wird.

Erfindungsgemäß wird der Papierindustrie ermöglicht, von dem bisherigen Verfahren der "Spitzenverklebung" abzugehen, ohne aber deren Vorteile aufzugeben.

Denn aus technischen Gründen und auch aus Rationalisierungsgründen ist es erwünscht, beim automatischen Rollenwechsel an Beschichtungsanlagen von der bekannten "Spitzenverklebung" mit beidseitig wiederaufbereitbarem Klebeband (Fix) abzugehen. Nun kann auf ein einseitig klebendes wiederaufbereitbares Klebeband umgestellt werden, mit beachtlichen Vorteilen.

Bei dieser Verklebungstechnik mit einem erfindungsgemäßen Klebeband geht man vorteilhaft so vor, daß die oberste Papierlage (Rohpapier) mit einem etwa 120 mm breiten doppelseitig klebenden abgedeckten wiederaufbereitbarem Klebeband überklebt wird (diagonal zur Laufrichtung).

Das beidseitg klebende Klebeband mit der offenen Klebebandseite nach außen steht jetzt dem eigentlichen Splice zur Verfügung, wenn die ggf. vorhandene Abdeckung entfernt ist.

Beim Beschleunigen des Papierwurfes ist erforderlich, daß der Anfang des Papiers (Klebestelle) mit Hilfe eines beidseitig klebenden Klebebandes (wiederaufbereitbar) festgehalten wird. Besonders geeignet ist hierbei ein tesafix, ausgerüstet mit einem spaltfreudigen Papierträger.

Das beidseitig klebende Spliceband wird jetzt mit Hilfe dieses beidseitg klebenden spaltfreudigen tesafixes and die nächste Papierlage befestigt.

Geeignete spleißfreudige/spaltende Papierträger sind solche, die bei erfindungsgemäßem Einsatz in einem Klebeband beim damit vorgenommenen Splice spleißen/spalten: das Papier reißt in Richtung der Papierebene auf. Ein einfacher Handversuch kann dazu dienen, geeignete Papierträger zu ermitteln: das Papier wird beidseitig mit einer stark klebenden Selbstklebemasse beschichtet, wie dies Stand der Technik ist. Ein Streifen eines solchen Fixes (doppelseitig klebenden Bandes) wird dann zwischen zwei Blätter Schreibpapier geklebt und die Blätter ruckartig auseinander gerissen, senkrecht zur Ebene der Blätter. Im Fall eines spleißfreudigen Papierträgers spaltet dieser dabei in Richtung seiner Papierebene, wobei die auf den Blättern verklebten Bruchstücke an ihren nun offen liegenden Rückseite jeweils mit den Resten bzw. Teilschichten des gespaltenen Papierträgers bedeckt sind. Ein solcher Papierträger ist für die Erfindung geeignet Im Fall eines nicht spleißfreudigen Papierträgers zerreißen die verklebten Blätter, die Verklebung bleibt intakt. Ein solcher Papierträger ist nicht für die vorliegende Erfindung geeignet. Sofern also vom Papierhersteller keine ausreichenden Angaben zur Spleißfreudigkeit bzw. Spaltbarkeit eines Papiers zu erhalten sind, kann dieser Test schnell und einfach Auskunft geben.

Um beim Beschleunigen des Papierwurfes (zur Zeit bis ca.1600 m/min) ein Eindringen von Luft zu verhindern, wird vorteilhaft ein Streifen quer über die gesamte Papierbahn zu geklebt.

Die erfindungsgemäß erzielten Vorteile liegen insbesondere darin, daß sich die Klebestelle beim Splice zwischen der obersten Papierbahn der Papierrolle und der Papierbahn der ablaufenden Papierbahn befindet. Dadurch ist eine sichere Kraftübertragung des Bahnzuges von der ablaufenden Papierbahn auf die oberste Papierbahn gewährleistet.

Im folgenden soll die Erfindung anhand eines Ausführungsbeispiels näher beschrieben werden, ohne sie damit aber unnötig einschränken zu wollen. Es zeigen:
- Fig. 1: eine seitliche, schematische Ansicht eines erfindungsgemäßen Klebebandes,
- Fig. 2: eine seitliche, schematische Ansicht eines Klebebandes gemäß Fig. 1, aufgeklebt auf eine Papierrolle und fertig für einen fliegenden Rollenwechsel, und
- Fig. 3: eine Ansicht gemäß Fig. 2, aber nach erfolgtem fliegenden Rollenwechsel.

Im einzelnen zeigt Fig. 1 ein Klebeband 1 mit einem Träger 2 aus gekrepptem Papier, beidseitig beschichtet mit einer wasserlöslichen Selbstklebemasse 3 / 3a. Die Gesamtdicke des Trägers 2 mit Selbstklebemasse 3/3a beträgt 0,085 mm, die Breite 150 mm, im Handel als ***tesa***fix 51914 (Beiersdorf, Deutschland). Abgedeckt ist die Selbstklebemasse 3 mit einem silikonisierten Trennpapier 4. Am rechten Ende des Klebebandes 1 ist ein einseitig klebendes Klebeband 6 unterklebt, bestehend aus einem spleißfreudigen Papierträger 7, einseitig beschichtet mit wasserlöslicher Selbstklebemasse 9, und abgedeckt mit einem silikonisierten Trennpapier 10. Das Klebeband 6 hat eine Breite von 9 mm.

In Fig. 2 ist dargestellt, wie ein solches Klebeband 1 auf eine Papierbahn 11 geklebt ist, und zwar mit dem linken Teil. Auch das Trennpapier 10 wurde von der Unterseite des unterklebten Klebebandes 6 abgezogen und die damit freiliegende Selbstklebemasse 9 auf die unter der Papierbahn 11 liegende Papierbahn 12 einer Papierrolle verklebt. Auch das Trennpapier 4 wurde abgezogen, so daß die so ausgerüstete Papierrolle fertig für einen fliegenden Rollenwechsel ist, wobei die Verklebung des Klebebandes 1 schräg über die Rolle verläuft, um einen Ruck im Moment des fliegenden Rollenwechsels zu vermeiden.

Die Selbstklebemasse 3 liegt nun offen und bereit für diesen fliegenden Wechsel, in einer Breite von 120 mm und über die gesamte Breite der Papierrolle.

Die so ausgerüstete (neue) Papierrolle wird neben die abgewickelte (alte) Papierrolle gebracht, an die die neue angesetzt werden soll, und auf die gleiche Drehgeschwindigkeit beschleunigt wie diese. Ist dies erreicht, kann der Wechsel vollzogen werden: die neue Rolle wird an die alte herangeführt, die Selbstklebemasse 3 verklebt gemäß Fig. 3 mit der Papierbahn 13 der alten Rolle, während der spleißfreudige Papierträger 7 derart spleißt, dass das Teil 7a auf dem Klebeband 1 verbleibt und dort die Selbstklebemasse 3 abdeckt, während der andere Teil 7b auf der Selbstklebemasse 9 verbleibt, welche auf der Papierbahn 12 klebt. Damit sind beide Selbstklebemassen 3 und 9 gewissermaßen neutralisiert, kleben nicht mehr, und stören damit auch nicht im weiteren Prozeß in den Papiermaschinen.

Gemäß einer weiteren Ausführungsform ist auf der Oberseite des Trennpapiers 4 eine Applikationshilfe angeordnet, insbesondere in Form einer aufgedruckten Linie 14 (Fig. 1), um das genaue Plazieren des Klebebandes 1 zu erleichtern.

## Patentansprüche

1. Klebeband für den fliegenden Rollenwechsel in Papierveredelungsmaschinen oder dergleichen, mit einem Papierträger und einer wasserlöslichen Selbstklebemasse, wobei der Papierträger (2) beidseitig mit einer wasserlöslichen Selbstklebemasse (3, 3a) beschichtet ist, **dadurch gekennzeichnet, daß**
ein Randbereich der Rückseite des Klebebandes (1) mit einem einseitig klebenden Klebeband ausgerüstet ist, welches seinerseits einen spleißfreudigen Papierträger (7) aufweist, der wiederum mit wasserlöslicher Selbstklebmasse (9) ausgerüstet ist, wobei das Klebeband (6) auf der Rückseite des Klebebandes (1) so angeordnet ist, daß das Klebeband (6) seitlich mit der einen Seite des Klebebandes (1) abschließt, und wobei die Breite des Klebebandes (6) kleiner ist als die Breite des Klebebandes (1).

2. Klebeband nach Anspruch 1, **dadurch gekennzeichnet, daß** die Selbstklebemassen (3, 9 und 17) eine Abdeckung (4, 10 und 18) aufweisen.

3. Klebeband nach Anspruch 1, **dadurch gekennzeichnet, daß** das Klebeband (1) 60 bis 150 mm breit ist, während das auf der Rückseite vorgesehene Klebeband (6) 4 bis 20 mm, insbesondere 5 bis 10 mm breit ist.

4. Verfahren eines fliegenden Rollenwechsels in einer Papierveredelungsmaschine oder dergleichen, wobei ein Klebeband mit einem Papierträger und einer wasserlöslichen Selbstklebemasse verwendet wird, **dadurch gekennzeichnet, daß**
man ein Klebeband nach einem der Ansprüche 1 bis 3 einsetzt und auf der obersten Papierbahn einer neuen Papierrolle teilweise aufklebt, während das auf der Rückseite des Klebebandes (1) befindliche Klebeband (6) seinerseits mit der darunter liegenden Bahn verklebt und damit die oberste Papierbahn sichert, worauf die neue Papierrolle neben einer fast gänzlich abgespulten, zu ersetzenden alten Papierrolle plaziert wird und auf gleiche Geschwindigkeit wie diese beschleunigt wird, dann gegen diese gedrückt wird, so daß die offenliegende Selbstklebemasse des Klebebandes mit der Papierbahn der alten Rolle bei im wesentlichen gleichen Geschwindigkeiten der Papierbahnen verklebt; während zugleich der spleißfreudige Papierträger derart spleißen, daß beide Selbstklebemassen, die er trug, von seinen Resten nichtklebend abgedeckt sind.

## Claims

1. Adhesive tape for the flying splice in paper finishing machines or the like having a paper backing and a water-soluble self-adhesive composition, the paper backing (2) being coated on both sides with a water-soluble self-adhesive composition (3, 3a), **characterized in that** an edge region of the reverse face of the adhesive tape (1) is equipped with a single-sided adhesive tape which in turn has a readily splicing paper backing (7) which is equipped in turn with water-soluble self-adhesive composition (9), the adhesive tape (6) on the reverse face of the adhesive tape (1) is arranged such that the adhesive tape (6) ends laterally with one side of the adhesive tape (1), and wherein the width of the adhesive tape (6) is less than the width of the adhesive tape (1).

2. Adhesive tape according to Claim 1, **characterized in that** the self-adhesive compositions (3, 9 and 17) have a liner (4, 10 and 18).

3. Adhesive tape according to Claim 1, **characterized in that** the adhesive tape (1) is from 60 to 150 mm in width while the adhesive tape (6) provided on the reverse face is 4-20 mm, in particular 5-10 mm, in width.

4. Method of flying splice in a paper finishing machine or the like, using an adhesive tape having a paper backing and a water-soluble self-adhesive composition, **characterized in that** an adhesive tape according to one of Claims 1 to 3 is employed and bonds part of the topmost web of a new roll of paper, while the adhesive tape (6) located on the reverse face of the adhesive tape (1) in turn bonds with the underlying web and thus secures the topmost web of paper, whereupon the new roll of paper is placed adjacent to an almost fully unwound old roll of paper that is to be replaced and is accelerated to the same speed as the old roll, and then is pressed against it so that the exposed self-adhesive composition of the adhesive tape bonds with the paper web of the old roll when the webs of paper are at essentially the same speeds, while at the same time the readily splicing paper backings splice in such a way that the self-adhesive compositions which it carried are masked non-adhesively by its remains.

## Revendications

1. Bande adhésive pour le changement volant de bobines dans les machines de finissage de papier ou analogues, avec un support en papier et une masse autoadhésive soluble dans l'eau, le support en papier (2) étant revêtu des deux côtés d'une masse autoadhésive (3, 3a) soluble dans l'eau, **caractérisée en ce qu'**une zone de bord du dos de la bande adhésive (1) est pourvu d'une bande adhésive monoface, qui présente pour sa part un support en papier (7) qui se fend facilement, qui est à son tour pourvu d'une masse autoadhésive (9) soluble dans l'eau, la bande adhésive (6) étant disposée sur le dos de la bande adhésive (1) de telle manière que la bande adhésive (6) se raccorde latéralement à un côté de la bande adhésive (1) et la largeur de la bande adhésive (6) étant inférieure à la largeur de la bande adhésive (1).

2. Bande adhésive selon la revendication 1, **caractérisée en ce que** les masses autoadhésives (3, 9 et 17) présentent une protection (4, 10 et 18).

3. Bande adhésive selon la revendication 1, **caractérisée en ce que** la bande adhésive (1) présente une largeur de 60 à 150 mm alors que la bande adhésive (6) prévue sur le dos présente une largeur de 4 à 20 mm, en particulier de 5 à 10 mm.

4. Procédé de changement volant de bobine dans une machine de finissage de papier ou analogue, en utilisant une bande adhésive avec un support en papier et une masse autoadhésive soluble dans l'eau, **caractérisé en ce qu'**on utilise une bande adhésive selon l'une quelconque des revendications 1 à 3 et on la colle en partie sur la bande de papier supérieure d'une nouvelle bobine de papier, alors que la bande adhésive (6) située sur le dos de la bande adhésive (1) est pour sa part collée avec la bande sous-jacente et assure la bande de papier supérieure, suite à quoi la nouvelle bobine de papier est placée à côté d'une ancienne bobine de papier à remplacer, quasiment totalement dévidée et est accélérée à la même vitesse que celle-ci, puis est pressée contre celle-ci de telle manière que la masse autoadhésive découverte de la bande adhésive colle avec la bande de papier de l'ancienne bobine à des vitesses essentiellement identiques des bandes de papier, alors que le support en papier qui se fend facilement se fend de telle manière que les deux masses autoadhésives qu'il portait sont recouvertes par ses restes de manière à ne plus coller.
